# EUROPÄISCHE PATENTSCHRIFT

(11) **EP 2 186 003 B1**
(45) Veröffentlichungstag und Bekanntmachung des Hinweises auf die Patenterteilung: **27.06.2012**
(21) Anmeldenummer: 08786551.5
(22) Anmeldetag: 29.07.2008
(51) Int. Cl.: G06F 11/00, G05B 23/02

(54) **VERFAHREN UND VORRICHTUNG ZUR ERMITTLUNG EINER EINTRITTSWAHRSCHEINLICHKEIT**
METHOD AND DEVICE FOR DETERMINING A PROBABILITY OF OCCURRENCE
PROCÉDÉ ET DISPOSITIF DE DÉTERMINATION D'UNE PROBABILITÉ D'ADMISSION

(30) Priorität: 14.09.2007 DE 102007043871
(43) Veröffentlichungstag der Anmeldung: 19.05.2010
(73) Patentinhaber: Siemens Aktiengesellschaft, 80333 München (DE)
(72) Erfinder: HEILMANN, Reiner, 85658 Egmating (DE); LOHNER, Manfred, 80807 München (DE); ROTHBAUER, Stefan, 85391 Allerhausen (DE); SUTOR, Ariane, 82166 Gräfelfing (DE)
(86) Internationale Anmeldenummer: PCT/EP2008/059913
(87) Internationale Veröffentlichungsnummer: WO 2009/037042

(56) Entgegenhaltungen:
- WO-A1-01/09724
- WO-A2-03/042918
- WO-A2-2007/086823

## Beschreibung

Die Erfindung betrifft ein Verfahren und eine Vorrichtung zur Ermittlung einer Eintrittswahrscheinlichkeit, dass ein Gesamtsystem eine vorgegebene Systemperformanz erfüllt. Bei dem Gesamtsystem handelt es sich beispielsweise um ein Zug-Bremssystem, das Bremsen unterschiedlichen Bremstyps aufweist.

Es werden zunehmend eingebettete Systeme eingesetzt, welche sicherheitskritisch sind und mit anderen Funktionen vernetzt werden. Der zunehmende Funktionsumfang sowie die zunehmende Funktionsvernetzung erfordern Qualitätssicherungsmaßnahmen, die die Zuverlässigkeit und die Sicherheit der technischen Systeme erhöhen. Zu diesen Maßnahmen gehören u. a. Fehleranalyse und Fehlererkennung. Dabei werden Testmethoden, statistische Analyseverfahren sowie die Fehleranalyseverfahren eingesetzt. Die quantitative Bewertung von Fehlerszenarien hat insbesondere in der Sicherheitstechnik einen sehr hohen Stellenwert.

Ein Beispiel für ein sicherheitskritisches Gesamtsystem ist ein Zug-Bremssystem, das sich aus mehreren Sub- bzw. Teilsystemen zusammensetzt, die Bremsen unterschiedlichen Bremstyps aufweisen. Um die Zulassung von Zügen zu erreichen und um den Nachweis zu erbringen, dass das technische Gesamtsystem bestimmten Sicherheits- und Verfügbarkeitserfordernissen genügt, ist es notwendig, die Eintrittswahrscheinlichkeit zu ermitteln, die angibt, ob das Gesamtbremssystem eine vorgegebene Systemperformanz erfüllt, beispielsweise, ob die aggregierte Bremskraft aller Bremsen für alle Szenarien ausreichend ist.

Die WO 01/09724 A1 offenbart ein Wartungsassistentensystem, dass eine Prüfperson durch einen Prüfprozess einer Komponente eines Systems führt. Ein Hauptverarbeitungssystem speichert und dient einer Komponenten-Zusammenbruchstruktur für das System, das die Identifizierung der Komponente erlaubt. Das Hauptverarbeitungssystem dient ebenso einem Prüfassistenten, typischerweise in der Form eines Expertensystems, das auf eine Datenstruktur zur Führung der Prüfperson durch den Prüfprozess zugreift. Die Prüfperson greift auf die Komponenten-Zusammenbruchstruktur und den Wartungsassistenten zu, der ein Fernverarbeitungssystem verwendet, wie beispielsweise einen persönlichen Datenassistenten oder mobilen Computern zum Erlauben einer Überprüfung vor Ort. Das Wartungssystem zeichnet die Beobachtungen der Prüfperson auf und erzeugt eine Arbeitsspezifikation, die die erforderliche Wartung für die Komponente beschreibt.

Es ist daher eine Aufgabe der vorliegenden Erfindung, ein Verfahren und eine Vorrichtung zur Ermittlung einer

Eintrittswahrscheinlichkeit zu schaffen, welche angibt, ob ein komplexes Gesamtsystem eine vorgegebene Systemperformanz erfüllt.

Diese Aufgabe wird erfindungsgemäß durch ein Verfahren mit den im Patentanspruch 1 angegebenen Merkmalen gelöst.

Die Erfindung schafft ein Verfahren zur Ermittlung einer Eintrittswahrscheinlichkeit, dass ein Gesamtsystem eine vorgegebene Systemperformanz erfüllt,
wobei das Gesamtsystem aus Instanzen verschiedener Klassen von Teilsystemen zusammengesetzt ist, und
wobei jede Klasse von Teilsystemen einen zugehörigen Klassen-Fehlerbaum aufweist, mit den Schritten:
(a) Berechnen (S1) einer Gesamtperformanz für jede Ausfall-Kombination der Anzahl von nicht ausgefallenen Instanzen innerhalb einer Klasse;
(b) automatisches Selektieren (S2) von Ausfall-Kombinationen deren berechnete Gesamtperformanz jeweils die vorgegebene Systemperformanz erfüllt;
(c) automatisches Generieren (S3) eines Gesamt-Fehlerbaumes basierend auf den Klassen-Fehlerbäumen von Teilsystemen in Abhängigkeit von den selektierten Ausfall-Kombinationen; und
(d) Auswerten (S4) des generierten Gesamt-Fehlerbaumes zur Berechnung der Eintritts-Wahrscheinlichkeit einer Erfüllung der vorgegebenen Systemperformanz durch das Gesamtsystem.

In einer Ausführungsform des erfindungsgemäßen Verfahrens werden Ausfall-Kombinationen selektiert, deren Gesamtperformanz größer ist als ein einstellbarer Stellenwert für die Systemperformanz des Gesamtsystems.

In einer alternativen Ausführungsform des erfindungsgemäßen Verfahrens werden Ausfall-Kombinationen selektiert, deren Gesamtperformanz geringer ist als ein einstellbarer Schwellenwert für die Systemperformanz des Gesamtsystems.

In einer Ausführungsform des erfindungsgemäßen Verfahrens weist jeder Klassen-Fehlerbaum Verknüpfungselemente zur logischen Verknüpfung von Ereignissen auf.

In einer Ausführungsform des erfindungsgemäßen Verfahrens verknüpft jeder Klassen-Fehlerbaum mehrere Primärereignisse zu einem zugehörigen Ausgangsereignis.

In einer Ausführungsform des erfindungsgemäßen Verfahrens werden die durch die Klassen-Fehlerbäume aller Instanzen der verschiedenen Klassen von Teilsystemen erzeugten Ausgangsereignisse durch eine generierte Kombinatorik des Gesamt-Fehlerbaumes logisch zu einem Top-Ereignis verknüpft.

In einer Ausführungsform des erfindungsgemäßen Verfahrens wird das Top-Ereignis durch die Systemperformanz des Gesamtsystems gebildet.

In einer Ausführungsform des erfindungsgemäßen Verfahrens weist die Kombinatorik des Gesamt-Fehlerbaums logische NOOM-Verknüpfungselemente, logische UND-Verknüpfungselemente oder logische ODER-Verknüpfungselemente auf.

In einer Ausführungsform des erfindungsgemäßen Verfahrens tritt an einem Ausgang eines NOOM (N out of M)-Verknüpfungselement ein Ausgangsereignis auf, wenn mindestens N von M möglichen Eingangsereignissen an Eingängen des NOOM-Verknüpfungselementes auftreten.

In einer Ausführungsform des erfindungsgemäßen Verfahrens sind die Klassen-Fehlerbäume der Klassen von Teilsystemen vermascht oder unvermascht.

In einer Ausführungsform des erfindungsgemäßen Verfahrens weist jede Klasse eines Teilsystems eine Performanz auf.

In einer Ausführungsform des erfindungsgemäßen Verfahrens wird die Gesamtperformanz einer Ausfall-Kombination von nicht ausgefallenen Instanzen eines Teilsystems durch die Summe aller Performanzen der nicht ausgefallenen Instanzen gebildet.

In einer Ausführungsform des erfindungsgemäßen Verfahrens wird eine Klasse eines Teilsystems durch einen Bremstyp gebildet.

In einer Ausführungsform des erfindungsgemäßen Verfahrens weist jeder Bremstyp eine zugehörige Bremskraft als Performanz auf.

In einer Ausführungsform des erfindungsgemäßen Verfahrens wird das Gesamtsystem durch ein Bremssystem gebildet, das sich aus mehreren Bremsen unterschiedlichen Bremstyps zusammensetzt.

In einer Ausführungsform des erfindungsgemäßen Verfahrens wird die Systemperformanz des Gesamtsystems durch eine aggregierte Bremskraft aller Bremsen des Bremssystems gebildet.

Die Erfindung schafft ferner eine Vorrichtung zur Ermittlung einer Eintrittswahrscheinlichkeit, dass ein Gesamtsystem eine vorgegebene Systemperformanz erfüllt,
wobei das Gesamtsystem aus Instanzen verschiedener Klassen von Teilsystemen zusammengesetzt ist und
wobei jede Klasse von Teilsystemen einen zugehörigen Klassen-Fehlerbaum aufweist, mit:
(a) einer Einheit zum Berechnen einer Gesamtperformanz für jede Ausfall-Kombination der Anzahl von nicht ausgefallenen Instanzen innerhalb einer Klasse;
(b) einer Einheit zum automatischen Selektieren von Ausfall-Kombinationen deren berechnete Gesamtperformanz jeweils die vorgegebene Systemperformanz erfüllt;
(c) einer Einheit zum automatischen Generieren eines Gesamt-Fehlerbaumes basierend auf den Klassen-Fehlerbäumen von Teilsystemen in Abhängigkeit von den selektierten Ausfall-Kombinationen; und mit
(d) einer Einheit zum Auswerten des generierten Gesamt-Fehlerbaumes zur Berechnung der Eintritts-Wahrscheinlichkeit einer Erfüllung der vorgegebenen Systemperformanz durch das Gesamtsystem.

In einer Ausführungsform der erfindungsgemäßen Vorrichtung wird das Gesamtsystem durch ein Bremssystem gebildet, das sich aus Bremsen unterschiedlichen Bremstyps zusammensetzt.

Die Erfindung schafft ferner ein Computerprogramm zur Durchführung des Verfahrens nach einem der Ansprüche 1-16.

Die Erfindung schafft ferner einen Datenträger zum Speichern des Computerprogramms.

Im Weiteren werden Ausführungsformen des erfindungsgemäßen Verfahrens und der erfindungsgemäßen Vorrichtung unter Bezugnahme auf die beigefügten Figuren zur Erläuterung erfindungsgemäßer Merkmale beschrieben.

Es zeigen:
Figur 1 ein Ablaufdiagramm zur Darstellung eines Ausführungsbeispiels des erfindungsgemäßen Verfahrens zur Ermittlung einer Eintrittswahrscheinlichkeit;
Figur 2 eine Tabelle zur Darstellung eines einfachen Beispiels zur Erläuterung der Funktionsweise des erfindungsgemäßen Verfahrens;
Figur 3 einen Ausschnitt aus einem Gesamtfehlerbaum für eine in Tabelle gemäß Figur 2 enthaltene Ausfall-Kombination;
Figur 4 ein konkretes Beispiel für ein Zug-Bremssystems als Gesamtsystem zur Erläuterung der Funktionsweise des erfindungsgemäßen Verfahrens;
Figur 5 eine Tabelle zur Darstellung verschiedener Kombinationsmöglichkeiten, welche eine vorgegebene Systemperformanz erfüllen, für das in der Tabelle gemäß Figur 4 angegebene Beispiel;
Figur 6 ein Diagramm zur Modellierung eines aus verschiedenen Bremstypen zusammengesetzten Gesamtbremssystems von Klassen-Fehlerbäumen für das in Figur 4 angegebene Beispiel;
Figur 7 ein Beispiel für einen basierend auf den Klassen-Fehlerbäumen gemäß Figur 6 konstruierten Gesamtfehlerbaums.

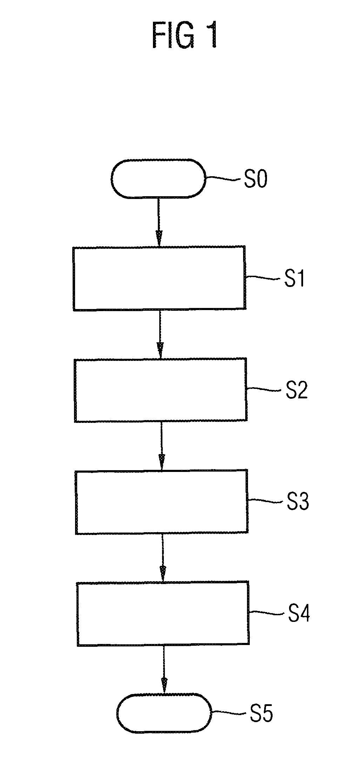

Das erfindungsgemäße Verfahren zur Ermittlung einer Eintrittswahrscheinlichkeit W weist mehrere Schritte auf, wie man aus Figur 1 erkennen kann. Das erfindungsgemäße Verfahren ermittelt eine Eintrittswahrscheinlichkeit, dass ein Gesamtsystem eine vorgegebene Systemperformanz erfüllt.

Bei einem Gesamtsystem handelt es sich um ein komplexes System, das sich aus Instanzen verschiedener Klassen von Teilsystemen zusammensetzt. Bei dem Gesamtsystem handelt es sich beispielsweise um ein Zug-Bremssystem eines Zuges. Dieses Zug-Bremssystem enthält mehrere Teilsysteme beispielsweise Einzelbremsen unterschiedlichen Bremstyps.

Jeder Bremstyp bildet eine Bremstypklasse. Jede Bremstypklasse wird durch Instanzen, d. h. reale Bremsen, instanziiert. Jede Klasse von Teilsystemen, beispielsweise jede Klasse von Bremsen weist einen zugehörigen Klassen-Fehlerbaum auf. Jeder Klassen-Fehlerbaum enthält verschiedene Verknüpfungselemente zur logischen Verknüpfung von Ereignissen. Ein Klassen-Fehlerbaum verknüpft Eingangs- bzw. Primärereignisse zu einem zugehörigen Ausgangsereignis. Die Verknüpfungselemente eines Klassen-Fehlerbaums enthalten beispielsweise logische UND
oder logische ODER-Gatter. Ein Klassen-Fehlerbaum kann beispielsweise mit einem Modell-Editor eines Fehlerbaum-Tools mit graphischer Editor-Oberfläche erzeugt werden.

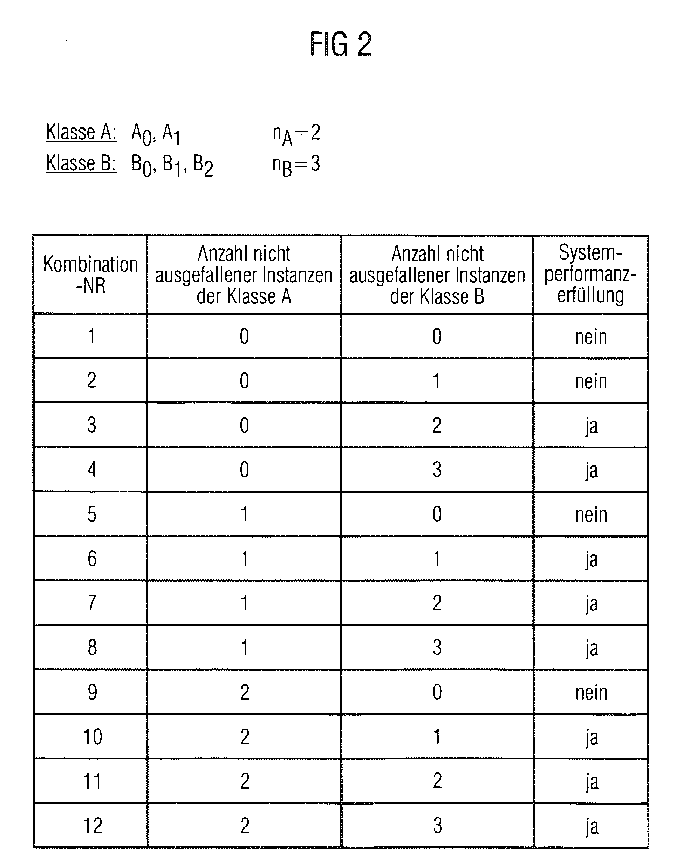

In einem ersten Schritt S1 des erfindungsgemäßen Verfahrens wird, wie in Figur 1 dargestellt, eine Gesamtperformanz für jede Ausfall-Kombination der Anzahl von nicht ausgefallenen Instanzen innerhalb einer Klasse berechnet. Figur 2 zeigt ein einfaches Beispiel zur Erläuterung des erfindungsgemäßen Verfahrens. Bei dem in Figur 2 dargestellten Beispiel weist das Gesamtsystem zwei verschiedene Arten bzw. zwei verschiedene Klassen von Sub- bzw. Teilsystemen auf, nämlich die Klasse A und die Klasse B. Dabei werden im Gesamtsystem zwei Subsysteme bzw. Teilsysteme der Klasse A und drei Sub- bzw. Teilsysteme der Klasse B eingesetzt. Die Anzahl N_{A} der im Gesamtsystem eingesetzten Systeme der Klasse A beträgt n_{A} = 2. Die Anzahl N_{B} der im Gesamtsystem eingesetzten Sub- bzw. Teilsystem der Klasse B beträgt n_{B} = 3.

Jedes Sub- bzw. Teilsystem wird durch eine reale Einheit, beispielsweise eine hergestellte Bremse des jeweiligen Bremstyps, instanziiert. Bei den beiden Klassen A und B handelt es sich z. B. um verschiedene Bremstypen eines Zug-Bremssystems. Bei dem in der Tabelle gemäß Figur 2 dargestellten einfachen Beispiel enthält das Bremssystem des Zuges zwei Bremsen des Typs bzw. der Klasse A und drei Bremsen des Typs bzw. der Klasse B. Die beiden Bremsen der Klasse A werden mit A0, A1 und die drei Bremsen der Klasse B werden mit B0, B1, B2 bezeichnet. Insgesamt enthält das Zug-Bremssystem fünf Bremsen, nämlich A0, A1, B0, B1, B2. In jeder Klasse von Bremsen kann eine unterschiedliche Anzahl von Bremsen ausfallen. Beispielsweise können von den beiden Bremsen des Bremstyps A bzw. der Klasse A keine, eine oder beide Bremsen ausfallen. Die Ausfallmöglichkeiten für jeden Bremstypen bzw. jede Bremsklasse beträgt somit n+1, wobei n die Anzahl der Instanzen der jeweiligen Klasse innerhalb des Gesamtsystems ist.

Die Gesamtanzahl der Kombinationen ergibt sich aus dem Produkt der Ausfallmöglichkeiten über alle vorhandenen Klassen:
wobei N die Anzahl der im Gesamtsystem vorhandenen Klassen ist.

Bei dem in Figur 2 dargestellten einfachen Beispiel beträgt die Anzahl von Kombinationen Z = (2 + 1) x (3 + 1) = 3 x 4 = 12.

Jede Instanz einer Klasse weist eine zugehörige Performanz auf. Jede Klasse von Bremsen bzw. jeder Bremstyp weist eine zugehörige Bremskraft auf. Beispielsweise weist eine Bremse der Klasse A eine Bremskraft von 100N auf, während eine Bremse der Klasse B eine Bremskraft von 200N aufweist. Entsprechend der in Figur 2 angegebenen Tabelle wird daraus eine Gesamtperformanz für jede Ausfall-Kombination der Anzahl von nicht ausgefallenen Instanzen innerhalb einer Klasse berechnet. Beträgt beispielsweise die vorgegebene Systemperformanz SP, ab der das Gesamtsystem bzw. das Zug-Bremssystem funktionsfähig ist, 250N, ergeben sich die berechnete Gesamtperformanz und die verschiedenen Ausfall-Kombinationen wie folgt:

| Kombination - NR | Bremskraft aller nicht ausgefallenen Bremsen der Klasse A | Bremskraft aller nicht ausgefallenen Bremsen der Klasse B | Summe -Gesamtbremskraft in Newton N | SP erfüllt 0=nein 1=ja |
|---|---|---|---|---|
| 1 | 0N | 0N | 0N | 0 |
| 2 | 0N | 200N | 200N | 0 |
| 3 | 0N | 400N | 400N | 1 |
| 4 | 0N | 600N | 600N | 1 |
| 5 | 100N | 0N | 100N | 0 |
| 6 | 100N | 200N | 300N | 1 |
| 7 | 100N | 400N | 500N | 1 |
| 8 | 100N | 600N | 700N | 1 |
| 9 | 200N | 0N | 200N | 0 |
| 10 | 200N | 200N | 400N | 1 |
| 11 | 200N | 400N | 600N | 1 |
| 12 | 200N | 600N | 800N | 1 |

Wie man aus der obigen Tabelle erkennen kann, ergibt sich die maximale Bremskraft des Gesamtsystems bei Ausfall-Kombination Nr. 12, d. h. weder eine Bremse der Klasse A noch eine Bremse der Klasse B ist ausgefallen und es liegt vollständige Bremskraft vor. Wird beispielsweise eine Systemperformanz SP von 250N gefordert, erfüllen die Kombinationen Nr. 1, 2, 5, 9 diese Systemperformanz des Gesamtsystems nicht, während die übrigen Kombinationen, d. h. die Kombinationen 3, 4, 6, 7, 8, 10, 11, 12 eine Gesamtperformanz aufweisen, die über dem gegebenen Schwellenwert von 250N liegt und somit die geforderte Systemperformanz erfüllt.

Im Schritt S2 des in Figur 1 dargestellten Ablaufdiagramms des erfindungsgemäßen Verfahrens werden diejenigen Ausfall-Kombinationen deren jeweilige Gesamtperformanz, beispielsweise deren Bremskraft, mit der vorgegebenen Systemperformanz SP des Systems verglichen. Beträgt die vorgegebene Systemperformanz beispielsweise 250N, erhält man das in der obigen Tabelle angegebene Ergebnis zur Erfüllung der Systemperformanz SP für die verschiedenen Ausfall-Kombinationen. Im Schritt S2 werden diejenigen Ausfall-Kombinationen selektiert, deren berechnete Gesamtperformanz der vorgegebenen Systemperformanz SP genügt. Gemäß der Tabelle 1 sind dies die Kombinationen 3, 4, 6, 7, 8, 10, 11, 12.

Bei einer möglichen Ausführungsform des erfindungsgemäßen Verfahrens werden nicht alle Ausfall-Kombinationen deren Gesamtperformanz über einen vorgegebenen Schwellenwert von beispielsweise 250N liegt, selektiert, sondern nur diejenigen, deren Gesamtperformanz nahe an dem Schwellenwert liegen. Wird beispielsweise festgestellt, dass die Kombination mit der Nummer 3 mit einer Gesamtbremskraft von 400N über dem vorgegebenen Schwellenwert von 250N liegt, wird bei einer möglichen Ausführungsform des erfindungsgemäßen Verfahrens die Ausfall-Kombination mit der Kombination Nr. 4 nicht selektiert. Die Kombination Nr. 3 gibt an, dass der Systemperformanz bereits genügt ist, wenn zwei Bremsen der Klasse B mit jeweils 200N nicht ausgefallen bzw. funktionstüchtig sind. Demzufolge ist eine Kombination, bei der noch mehr Bremsen der Klasse B funktionstüchtig sind, beispielsweise drei Bremsen der Klasse B entsprechend der Kombination Nr. 4 auf jeden Fall ebenfalls ausreichend, um der geforderten Systemperformanz SP zu genügen. In diesem optimierten Verfahren werden im angegebenen Beispiel gemäß der obigen Tabelle nur die Kombinationen mit der Kombinationsnummer 3, 6, 10 im Schritt S2 selektiert.

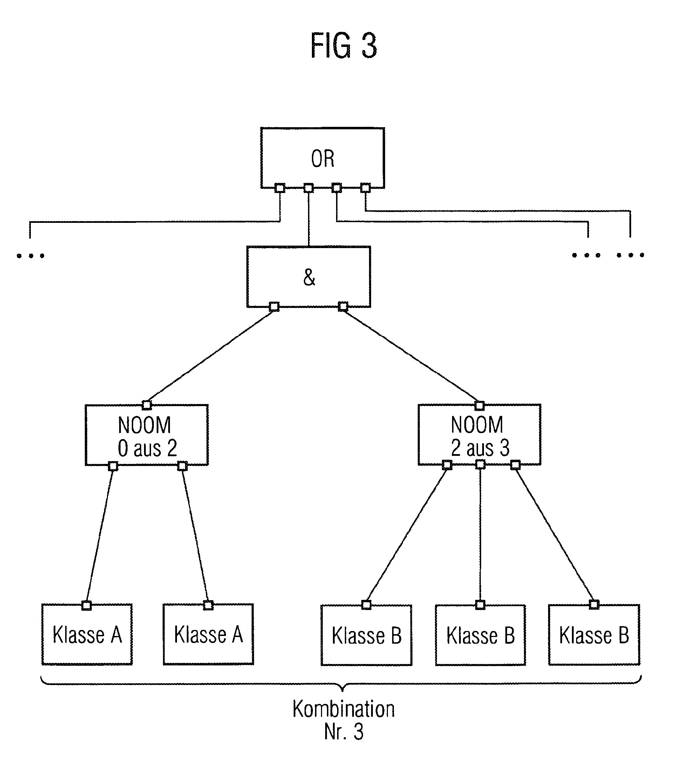

In einem weiteren Schritt S3 wird ein Gesamt-Fehlerbaum basierend auf den Klassen-Fehlerbäumen der Teilsysteme in Abhängigkeit von den selektierten Ausfall-Kombinationen automatisch generiert. Figur 3 zeigt einen Ausschnitt aus einem generierten Gesamt-Fehlerbaum für die Ausfall-Kombination Nr. 3 entsprechend Figur 2 und der obigen Tabelle. Die Kombination Nr. 3 erfüllt die geforderte Systemperformanz, da sie eine Gesamtbremskraft von 400N aufweist, die über dem geforderten Schwellenwert von 250N liegt. Die Ausfall-Kombination Nr. 3 weist als Anzahl der nicht ausgefallenen Instanzen der Klasse A null Bremsen auf, d. h. alle Bremsen der Klasse A sind ausgefallen und liefern somit eine Bremskraft von 0N. Dementsprechend werden die zwei Klassen-Fehlerbäume der Klasse A (n_{A} = 2) mit einem NOOM-Verknüpfungselement (0 aus 2) verknüpft. Das NOOM-Verknüpfungselement (N out of M) erhält am Ausgang einen logisch hohen Wert bzw. es tritt ein Ausgangsereignis an dem Ausgang des NOOM-Verknüpfungselements auf, wenn mindestens N von M möglichen Eingangsereignissen an Eingängen des NOOM-Verknüpfungselements auftreten. Der Ausgang des NOOM-Verknüpfungselements ist mit einem Eingang eines UND-Verknüpfungselementes verbunden. Der Klassen-Fehlerbaum, beispielsweise der Klasse A, verknüpft Primärereignisse zu einem zugehörigen Ausgangsereignis. Die beiden Ausgangsereignisse der beiden in Figur 3 dargestellten Klassen-Fehlerbäume für die Klasse A werden mit Eingängen des NOOM (0 aus 2)-Verknüpfungselements verbunden.

Die Ausfall-Kombination Nr. 3 gemäß Figur 2 und der obigen Tabelle weist als Anzahl der nicht ausgefallenen Instanzen der Klasse B einen Wert zwei auf. Das bedeutet, dass die Anzahl der nicht ausgefallenen Bremsen der Klasse B zwei beträgt bzw. eine der drei möglichen Bremsen der Klasse B ist ausgefallen. Die beiden nicht ausgefallenen Bremsen der Klasse B liefern eine Bremskraft von 2 x 200N = 400N und erfüllen somit ebenfalls die Systemperformanz SP des Gesamtbremssystems. Wie in Figur 3 dargestellt, werden die drei Klassen-Fehlerbäume für die drei Bremsen der Klasse B (n_{B} = 3) mit einem NOOM-Verknüpfungselement (2 aus 3) verknüpft, dessen Ausgang seinerseits mit einem Eingang des UND-Verknüpfungselements verbunden ist. Tritt an den Ausgängen der beiden NOOM-Verknüpfungselemente ein Ausgangsereignis auf, gibt das UND-Gatter bzw. UND-Verknüpfungselement einen logisch hohen Wert an ein ODER-Verknüpfungselement ab, dessen Ausgang das Top-Ereignis bildet. Das Top-Ereignis wird durch die Systemperformanz SP des Gesamtsystems gebildet. Bei dem in Figur 3 dargestellten Diagramm handelt es sich um einen Ausschnitt aus dem gebildeten Gesamt-Fehlerbaum. Für jede Ausfall-Kombination deren Gesamtperformanz die geforderte Systemperformanz SP des Systems erfüllt, erfolgt die entsprechende in Figur 3 dargestellte Verknüpfung.

In einem weiteren Schritt S4 des Verfahrens erfolgt eine Auswertung des generierten Gesamt-Fehlerbaums zur Berechnung der Eintrittswahrscheinlichkeit einer Erfüllung der vorgegebenen Systemperformanz SP durch das Gesamtsystem. Das Verfahren endet mit Schritt S5. Bei dem in Figur 2, 3 dargestellten Beispiel erfolgt die Selektion derjenigen Ausfall-Kombinationen, deren Gesamtperformanz größer ist als ein einstellbarer Schwellenwert für die Systemperformanz SP des Gesamtsystems.

Bei einer alternativen Ausführungsform können auch Ausfall-Kombinationen selektiert werden, deren Gesamtperformanz geringer ist als ein einstellbarer Schwellenwert für die Systemperformanz SP des Gesamtsystems.

Aus den Kombinationen der Zahlen möglicher Ausfälle werden in jeder Klasse diejenigen ausgewählt, die die vorgegebene Systemperformanz über- bzw. unterschreitet.

Wenn sich Kombinationen nur durch die Zahl der Ausfälle jeweils derselben Klasse unterscheiden, ist es hinreichend die Kombination mit der minimalen Zahl möglicher Ausfälle auszuwählen.

Es wird ein Gesamtfehlerbaum generiert, der sich aus den ausgewählten Kombinationen der Fehlerbäume der Teilssysteme zusammensetzt.

Die Auswertung des Gesamtfehlerbaums liefert als Ergebnis die Wahrscheinlichkeit, dass das System die vorgegebene Systemperformanz über- bzw. unterschreitet.

Eine weitere Möglichkeit besteht darin, die Kombinationen anstatt für die Versagensfunktion (V) für die Erfolgsfunktion (E) zu bestimmen, je nachdem welche Menge weniger mächtig ist, und die Wahrscheinlichkeit des gesuchten Ereignisses mittels der Beziehung p(V) = 1 - p(E) zu ermitteln.

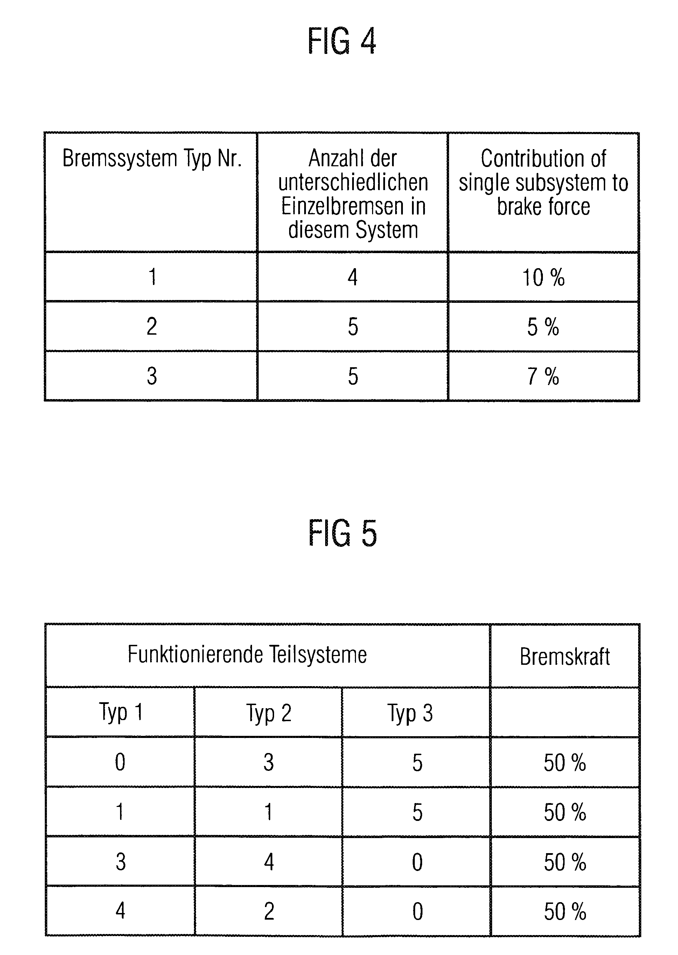

Figur 4 zeigt eine Tabelle zur Darstellung eines weiteren Ausführungsbeispiels des erfindungsgemäßen Verfahrens. In diesem Ausführungsbeispiel weist ein Gesamtsystem in Form eines Zug-Bremssystems drei verschiedene Typen von Bremsen auf, nämlich Bremsen der Typnummer 1, 2, 3. Die Anzahl der unterschiedlichen Einzelbremsen der verschiedenen Typen für das Gesamtbremssystem beträgt vier Bremsen des Bremstyps Nr. 1 und fünf Bremsen der Bremstypen Nr. 2, 3. Der Beitrag eines Teilsystems zu der Gesamtbremskraft bzw. eine Gesamtperformanz des Systems beträgt bei dem gewählten Beispiel für eine Bremse des Bremstyps Nr. 1 10 %, für eine Bremse des Bremstyps Nr. 2 5 % und für eine Bremse des Bremstyps Nr. 3 7 %.

Die Anzahl von möglichen Kombinationen beträgt: Z = (4 + 1) x (5 + 1) x (5 +1) = 5 x 6 x 6 = 180 Kombinationsmöglichkeiten.

Eine Analyse der Kombinationsmöglichkeiten deren aggregierte Bremskraft 50 % der geforderten Bremsleistung liefert, ergibt die in Tabelle gemäß Figur 5 angegebenen Kombinationen. Beispielsweise ergibt eine Kombination, bei der keine nicht ausgefallenen Bremsen des Typs 1 vorhanden sind, bei der drei nicht ausgefallene Bremsen des Bremstyps 2 vorhanden sind und bei der fünf nicht ausgefallenen Bremsen des Typs 3 vorhanden sind, eine Bremskraft von 0 x 10 % + 3 x 5 % + 5 x 7 % = 50 %.

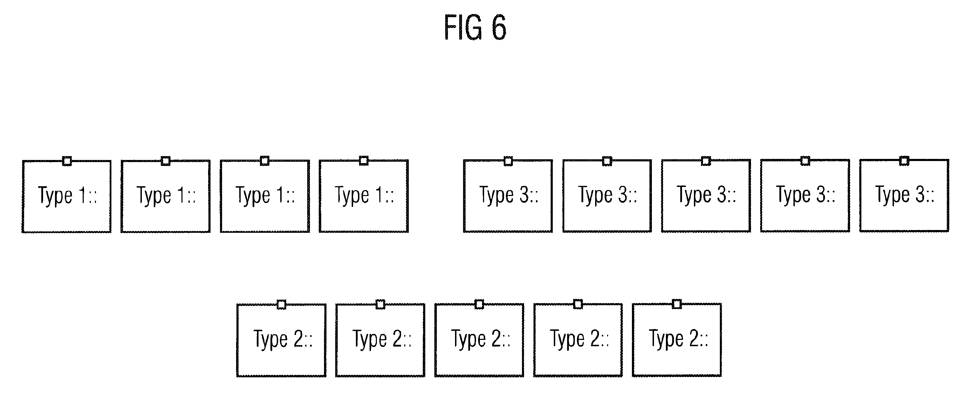

Ein andere Kombination der 180 möglichen Kombinationen, nämlich eine Kombination, bei der eine Bremse des Typs 1 funktioniert, bei der eine Bremse des Typs 2 funktioniert und bei der fünf Bremsen des Typs 3 funktionieren, ergeben eine Bremskraft von 1 x 10 % + 1 x 5 % + 5 x 7 %, d. h. ebenfalls 50 % Bremskraft. Figur 6 zeigt die in Figur 5 angegebenen Beispiel zugehörigen Klassen-Fehlerbäume für die drei verschiedenen Klassen bzw. drei verschiedenen Typen von Bremsen. Die Anzahl der unterschiedlichen Einzelbremsen des Typs 1 in dem Zug-Bremssystem beträgt vier, die Anzahl der Einzelbremsen des Typs 2 bzw. der Klasse 2 beträgt fünf, die Anzahl der Einzelbremsen des Typs 3 bzw. der Klasse 3 beträgt ebenfalls fünf. Entsprechend werden vier Klassen-Fehlerbäume des Typs 1, fünf Klassen-Fehlerbäume des Typs 2 und fünf Klassen-Fehlerbäume des Typs 3 vorgesehen bzw. editiert.

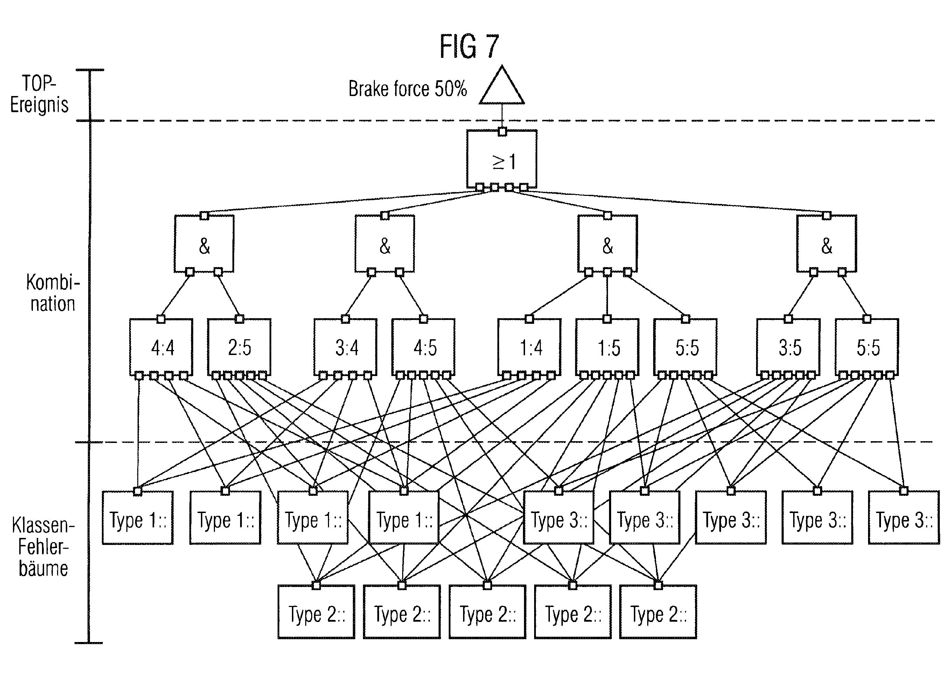

Basierend auf den in Figur 4 dargestellten Klassen-Fehlerbäumen der verschiedenen Klassen bzw. Typen von Bremsen wird ein Gesamt-Fehlerbaum generiert, wie er in Figur 7 dargestellt ist. Der generierte Gesamt-Fehlerbaum enthält drei Bereiche. Die Basis des Gesamt-Fehlerbaums bilden die Klassen-Fehlerbäume, deren Ausgänge mit Eingängen von NOOM-Gattern bzw. NOOM-Verknüpfungselementen verbunden sind. Die Ausgänge der NOOM-Verknüpfungselemente sind mit Eingängen von UND-Verknüpfungselementen verbunden sind, deren Ausgängen ihrerseits mit Eingängen eines gemeinsamen ODER-Gatters bzw. ODER-Verknüpfungselementes verbunden sind. Die NOOM-Verknüpfungselemente, die UND-Verknüpfungselemente und die ODER-Verknüpfungselemente bilden zusammen eine generierte Kombinatorik. Für das Top-Ereignis des generierten Gesamt-Fehlerbaumes, wie beispielsweise in Figur 7 dargestellt ist, wird eine Eintrittswahrscheinlichkeit zur Erfüllung einer vorgegebenen Systemperformanz durch das Gesamtsystem berechnet. Beispielsweise kann sich aus der Berechnung ergeben, dass die Eintrittswahrscheinlichkeit, dass die Gesamtbremskraft des Bremssystems unter 50 % abfällt geringer ist als 10⁻⁷ und somit derart klein ist, dass das zugehörige Zug-Bremssystem zugelassen werden kann.

Bei einer möglichen Ausführungsform des erfindungsgemäßen Verfahrens werden Fehlerbäume mit einem Fehlerbaum-Softwaretool, wie beispielsweise UWG3 generiert und mit XML beschrieben. Mit Hilfe eines Programms werden alle relevanten Kombinationen erzeugt und der entsprechende Gesamt-Fehlerbaum generiert.

Im Folgenden wird ein Pseudocode für ein Ausführungsbeispiel des erfindungsgemäßen Verfahrens angegeben:

```
 // Pseudocode für das Generieren der Kombinatorik des
 Gesamtfehlerbaums

 main()
 {
  lese_TeilsystemFehlerbaum;
  lese_TeilsystemPerformanz;
  lese_Grenze;

  // Die Anzahl der Klassen ist vorab bekannt und ändert sich
nicht
  // Darum gibt es für jede Klasse eine Schleife

  // zuerst testen, welche Kombinationen gebraucht werden
  for(iA = 0; iA <= Anzahl_in Klasse_A; iA++)
  {
   for(iB = 0; iB <= Anzahl_in Klasse_B; iB++)
   {
    ....
     ....
      for(iLAST = 0; iLAST <= Anzahl_in Klasse_LAST; iLAST++)
      {
       // iA ist die augenblickliche Anzahl der
funktionierenden Teilsysteme aus der Klasse A
       // iB ist die augenblickliche Anzahl der
funktionierenden Teilsysteme aus der Klasse B
       ...
       ...
       // iLAST ist die augenblickliche Anzahl der
funktionierenden Teilsysteme aus der Klasse LAST
       erreichte_performance = Funktion_von(iA, iB,...,
iLAST);
       if(erreichte_performance >= Grenze)
       {
        // Jetzt haben wir einen möglichen Kandidaten
        // Nun prüfen wir, ob wir einen besseren Kandidaten
finden
        erreichte_performance = Funktion_von(iA-1, iB,...,
iLAST);
        if(erreichte_performance >= Grenze)
        {
         // wir kommen wirklich mit einem Teilsystem der
Klasse A weniger aus
         // Dieser Kandidat ist also überflüssig
         continue;
        }
        erreichte_performance = Funktion_von(iA, iB-1,...,
iLAST) ;
        if(erreichte_performance >= Grenze)
        {
         // wir kommen wirklich mit einem Teilsystem der
Klasse B weniger aus
         // Dieser Kandidat ist also überflüssig
         continue;
        }
        ...
        ...
        erreichte_performance = Funktion_von(iA, iB,...,iLAST-1);
        if(erreichte_performance >= Grenze)
        {
         // wir kommen wirklich mit einem Teilsystem der
Klasse LAST weniger aus
         // Dieser Kandidat ist also überflüssig
         continue;
        }
        // ein Kandidat der es bis hierher geschafft hat, wird
genommen
        merke_diesen_Kandidat();
       }
      }
     ....
    ....
   }
  }
}
```

Erzeuge_mit_oben_gemerkten_Kandidaten_den_Fehlerbaum();

```
 // Jetzt haben wir den gesuchten Fehlerbaum mit dem
Topereignis "erreichte_performance >=  Grenze" und können
 // diesen Fehlerbaum durch UWG3 auswerten lassen.
 // Wir bekommen dann die Wahrscheinlichkeit für das
 Topereignis.
 }
```

Mit dem erfindungsgemäßen Verfahren ist es möglich, für komplexe technische Systeme, beispielsweise Bremssysteme, verlässlichen Sicherheits- und Verfügbarkeitskennwerte zu ermitteln. Die Ermittlung der Eintrittswahrscheinlichkeit, dass ein Gesamtsystem eine vorgegebenen Systemperformanz erfüllt, erfolgt bei einem erfindungsgemäßen Verfahren automatisiert.

Das erfindungsgemäße Verfahren eignet sich insbesondere für hochkomplexe Systeme mit einer sehr hohen Anzahl an Ausfall-Kombinationen von Teilsystemen unterschiedlicher Klassen. Das erfindungsgemäße Verfahren kann für beliebige technische System, beispielsweise technische Anlagen, eingesetzt werden. Beispielsweise kann das erfindungsgemäße Verfahren zur Analyse von Fertigungssystemen oder Rechnersystemen bzw. Netzwerken eingesetzt werden.

## Patentansprüche

1. Verfahren zur Ermittlung einer Eintritts-Wahrscheinlichkeit (W), dass ein Gesamtsystem eine vorgegebene Systemperformanz erfüllt, **dadurch gekennzeichnet dass** das Gesamtsystem aus Instanzen verschiedener Klassen von Teilsystemen zusammengesetzt ist, und wobei jede Klasse von Teilsystemen einen zugehörigen Klassen-Fehlerbaum aufweist, mit den Schritten:
(a) Berechnen (S1) einer Gesamtperformanz für jede Ausfall-Kombination der Anzahl von nicht ausgefallenen Instanzen innerhalb einer Klasse;
(b) automatisches Selektieren (S2) von Ausfall-Kombinationen deren berechnete Gesamtperformanz jeweils die vorgegebene Systemperformanz erfüllt;
(c) automatisches Generieren (S3) eines Gesamt-Fehlerbaumes basierend auf den Klassen-Fehlerbäumen von Teilsystemen in Abhängigkeit von den selektierten Ausfall-Kombinationen; und
(d) Auswerten (S4) des generierten Gesamt-Fehlerbaumes zur Berechnung der Eintritts-Wahrscheinlichkeit einer Erfüllung der vorgegebenen Systemperformanz durch das Gesamtsystem.

2. Verfahren nach Anspruch 1,
wobei Ausfall-Kombinationen selektiert werden, deren Gesamtperformanz größer ist als ein einstellbarer Schwellenwert für die Systemperformanz des Gesamtsystems.

3. Verfahren nach Anspruch 1,
wobei Ausfall-Kombinationen selektiert werden, deren Gesamtperformanz geringer ist als ein einstellbarer Schwellenwert für die Systemperformanz des Gesamtsystems.

4. Verfahren nach Anspruch 2,
wobei jeder Klassen-Fehlerbaum Verknüpfungselemente zur logischen Verknüpfung von Ereignissen aufweist.

5. Verfahren nach Anspruch 4,
wobei jeder Klassen-Fehlerbaum mehrere Primärereignisse zu einem zugehörigen Ausgangsereignis logisch verknüpft.

6. Verfahren nach Anspruch 5,
wobei die durch die Klassen-Fehlerbäume aller Instanzen der verschiedenen Klassen von Teilsystemen erzeugten Ausgangsereignisse durch eine generierte Kombinatorik des Gesamt-Fehlerbaumes logisch zu einem Top-Ereignis verknüpft werden.

7. Verfahren nach Anspruch 6,
wobei das Top-Ereignis durch die Systemperformanz des Gesamtsystems gebildet wird.

8. Verfahren nach Anspruch 7,
wobei die Kombinatorik des Gesamt-Fehlerbaumes logische NOOM-Verknüpfungselemente, logische UND-Verknüpfungselemente und logische ODER-Verknüpfungselemente aufweist.

9. Verfahren nach Anspruch 8,
wobei an einem Ausgang eines NOOM (N out of M)-Verknüpfungselementes ein Ausgangsereignis auftritt, wenn mindestens N von M möglichen Eingangsereignissen an Eingängen des NOOM-Verknüpfungselementes auftreten.

10. Verfahren nach Anspruch 11,
wobei die Klassen-Fehlerbäume der Klassen von Teilsystemen vermascht oder unvermascht sind.

11. Verfahren nach Anspruch 1,
wobei jede Klasse eines Teilsystems eine Performanz aufweist.

12. Verfahren nach Anspruch 1,
wobei die Gesamtperformanz einer Ausfall-Kombination von nicht ausgefallenen Instanzen einer Klasse eines Teilsystems durch die Summe aller Performanzen der nicht ausgefallenen Instanzen gebildet wird.

13. Verfahren nach Anspruch 1,
wobei eine Klasse eines Teilsystems durch einen Bremstyp gebildet wird.

14. Verfahren nach Anspruch 13,
wobei jeder Bremstyp die zugehörige Bremskraft als Performanz aufweist.

15. Verfahren nach Anspruch 14,
wobei das Gesamtsystem durch ein Bremssystem gebildet wird, das sich aus mehreren Bremsen unterschiedlichen Bremstyps zusammensetzt.

16. Verfahren nach Anspruch 15,
wobei die Systemperformanz des Gesamtsystems durch eine aggregierte Bremskraft aller Bremsen des Bremssystems gebildet wird.

17. Vorrichtung zur Ermittlung einer Eintritts-Wahrscheinlichkeit, dass ein Gesamtsystem eine vorgegebene Systemperformanz erfüllt, **dadurch gekennzeichnet dass** das Gesamtsystem aus Instanzen verschiedener Klassen von Teilsystemen zusammengesetzt ist und wobei jede Klasse von Teilsystemen einen zugehörigen Klassen-Fehlerbaum aufweist mit:
(a) einer Einheit zum Berechnen einer Gesamtperformanz für jede Ausfall-Kombination der Anzahl von nicht ausgefallenen Instanzen innerhalb einer Klasse;
(b) einer Einheit zum automatischen Selektieren von Ausfall-Kombinationen deren berechnete Gesamtperformanz jeweils die vorgegebene Systemperformanz erfüllt;
(c) einer Einheit zum automatischen Generieren eines Gesamt-Fehlerbaumes basierend auf den Klassen-Fehlerbäumen von Teilsystemen in Abhängigkeit von den selektierten Ausfall-Kombinationen; und mit
(d) einer Einheit zum Auswerten des generierten Gesamt-Fehlerbaumes zur Berechnung der Eintritts-Wahrscheinlichkeit einer Erfüllung der vorgegebenen Systemperformanz durch das Gesamtsystem.

18. Vorrichtung nach Anspruch 17,
wobei das Gesamtsystem durch ein Bremssystem gebildet wird, das sich aus Bremsen unterschiedlichen Bremstyps zusammensetzt.

19. Computerprogramm zur Durchführung des Verfahrens nach einem der Ansprüche 1 bis 16.

20. Datenträger zum Speichern des Computerprogramms nach Anspruch 19.

## Claims

1. Method for determining a probability of occurrence (W) that an overall system fulfils a predefined system performance, **characterised in that** the overall system is composed of instances of different classes of partial systems and wherein each class of partial system has an associated class fault tree, with the steps:
(a) Calculating (S1) an overall performance for each failure combination of non-failed instances within a class;
(b) Automatic selection (S2) of failure combinations, the calculated overall performance of which fulfils the predefined system performance;
(c) Automatic generation (S3) of an overall fault tree based on the class fault trees of partial systems as a function of the selected failure combinations; and
(d) Evaluation (S4) of the generated overall fault tree for calculating the probability of occurrence of a fulfilment of the predefined system performance by the overall system.

2. Method according to claim 1,
with failure combinations being selected of which the overall performance is greater than a threshold value able to be set for the system performance of the overall system.

3. Method according to claim 1,
with failure combinations being selected of which the overall performance is less than a threshold value able to be set for the system performance of the overall system.

4. Method according to claim 2,
with each class fault tree having logical combination elements for logical linkage of events.

5. Method according to claim 4,
with each class fault tree logically linking a number of primary events to an associated initial event.

6. Method according to claim 5,
with the initial events generated by the class fault trees of all instances of the different classes of partial systems being logically linked by a generated combinational logic of the overall fault tree into a top event.

7. Method according to claim 6,
with the top event being formed by the system performance of the overall system.

8. Method according to claim 7,
with the combinational logic of the overall fault tree having NOOM logical combination elements, AND logical combination elements and OR logical combination elements.

9. Method according to claim 8,
with an output event occurring at an output of an NOOM (N out of M) logical combination element if at least N out of M possible input events occur at inputs of the NOOM logical combination element.

10. Method according to claim 11,
with the class fault trees of the classes of partial systems being intermeshed or non-intermeshed.

11. Method according to claim 1, with each class of a partial system having a performance.

12. Method according to claim 1,
with the overall performance of a failure combination of non-failed instances of a class of a partial system being formed by the sum of all performances of the non-failed instances.

13. Method according to claim 1,
with a class of a partial system being formed by a brake type.

14. Method according to claim 13,
with each brake type having the associated brake force as its performance.

15. Method according to claim 14,
with the overall system being formed from a brake system composed of a number of brakes of different brake types.

16. Method according to claim 15,
with the system performance of the overall system being formed by an aggregated brake force of all brakes of brake system.

17. Device for determining a probability of occurrence that an overall system fulfils a predefined system performance, **characterised in that** the overall system is composed of instances of different classes of partial systems, and wherein each class of partial system has an associated class fault tree, with:
(a) A unit for calculating an overall performance for each failure combination of the number of non-failed instances within a class;
(b) A unit for automatic selection of failure combinations, the calculated performance of which fulfils the predefined system performance in each case;
(c) A unit for automatic generation of an overall fault tree based on the class fault trees of partial systems depending in the selected failure combinations; and with
(d) A unit for evaluation of the generated overall fault tree for calculating the probability of occurrence of the system performance being fulfilled by the overall system.

18. Device according to claim 17,
with the overall system being formed from a brake system composed of a number of brakes of different brake types.

19. Computer program for carrying out the method according to one of claims 1 to 16.

20. Data carrier for storing the computer program according to claim 19.

## Revendications

1. Procédé de détermination d'une probabilité d'occurrence (W) qu'un système global accomplisse une performance de système prédéterminée, **caractérisé en ce que** le système global est composé d'instances de différentes classes de sous-systèmes et chaque classe de sous-systèmes présente un arbre d'erreur de classe correspondant, comprenant les étapes :
(a) calcul (S1) d'une performance globale pour chaque combinaison de défaillance du nombre d'instances non défaillantes à l'intérieur d'une classe ;
(b) sélection automatique (S2) de combinaisons de défaillance dont la performance globale calculée accomplisse à chaque fois la performance de système prédéterminée ;
(c) génération automatique (S3) d'un arbre d'erreur global basé sur les arbres d'erreur de classe de sous-systèmes en fonction des combinaisons de défaillance sélectionnées ; et
(d) évaluation (S4) de l'arbre d'erreur global généré afin de calculer la probabilité d'occurrence d'un accomplissement de la performance de système prédéterminée par le système global.

2. Procédé selon la revendication 1,
dans lequel on sélectionne des combinaisons de défaillance dont la performance globale est supérieure à une valeur seuil réglable pour la performance de système du système global.

3. Procédé selon la revendication 1,
dans lequel on sélectionne des combinaisons de défaillance dont la performance globale est inférieure à une valeur seuil réglable pour la performance de système du système global.

4. Procédé selon la revendication 2,
dans lequel chaque arbre d'erreur de classe présente des éléments de combinaison pour la combinaison logique d'événements.

5. Procédé selon la revendication 4,
dans lequel chaque arbre d'erreur de classe combine de manière logique plusieurs événements primaires en un événement de sortie correspondant.

6. Procédé selon la revendication 5,
dans lequel les événements de sortie générés par les arbres d'erreur de classe de toutes les instances des différentes classes de sous-systèmes sont combinés de manière logique en un événement de plus haut niveau par une combinatorique générée de l'arbre d'erreur global.

7. Procédé selon la revendication 6,
dans lequel l'événement de plus haut niveau est formé par la performance de système du système global.

8. Procédé selon la revendication 7,
dans lequel la combinatorique de l'arbre d'erreur global présente des éléments de combinaison logique NOOM, des éléments de combinaison logique ET et des éléments de combinaison logique OU.

9. Procédé selon la revendication 8,
dans lequel un événement de sortie se produit à une sortie d'un élément de combinaison logique NOOM (N out of M) si au moins N de M possibles événements d'entrée se produisent à des entrées de l'élément de combinaison logique NOOM.

10. Procédé selon la revendication 11,
dans lequel les arbres d'erreur de classe des classes de sous-systèmes sont maillés ou non.

11. Procédé selon la revendication 1,
dans lequel chaque classe d'un sous-système présente une performance.

12. Procédé selon la revendication 1,
dans lequel la performance d'une combinaison de défaillance d'instances non défaillantes d'une classe d'un sous-système est formée par la somme de toutes les performances des instances non défaillantes.

13. Procédé selon la revendication 1,
dans lequel une classe d'un sous-système est formée par un type de frein.

14. Procédé selon la revendication 13,
dans lequel chaque type de frein présente comme performance la force de freinage correspondante.

15. Procédé selon la revendication 14,
dans lequel le système global est formé par un système de freinage qui se compose de plusieurs freins de type différent.

16. Procédé selon la revendication 15,
dans lequel la performance de système du système global est formée par une force de freinage agrégée de tous les freins du système de freinage.

17. Dispositif de détermination d'une probabilité d'occurrence qu'un système global accomplisse une performance de système prédéterminée, **caractérisé en ce que** le système global est composé d'instances de différentes classes de sous-systèmes et chaque classe de sous-systèmes présente un arbre d'erreur de classe correspondant, comprenant :
(a) une unité de calcul d'une performance globale pour chaque combinaison de défaillance du nombre d'instances non défaillantes à l'intérieur d'une classe ;
(b) une unité de sélection automatique de combinaisons de défaillance dont la performance globale calculée accomplisse à chaque fois la performance de système prédéfinie ;
(c) une unité de génération automatique d'un arbre d'erreur global basé sur les arbres d'erreur de classe de sous-systèmes en fonction des combinaisons de défaillance sélectionnées ; et
(d) une unité d'évaluation de l'arbre d'erreur global généré pour calculer la probabilité d'occurrence d'un accomplissement de la performance de système prédéfinie par le système global.

18. Dispositif selon la revendication 17,
dans lequel le système global est formé par un système de freinage qui se compose de freins de type différent.

19. Programme d'ordinateur pour la mise en oeuvre du procédé selon l'une des revendications 1 à 16.

20. Support de données pour la sauvegarde du programme d'ordinateur selon la revendication 19.
